# EUROPEAN PATENT SPECIFICATION

(11) **EP 2 371 534 B1**
(45) Date of publication and mention of the grant of the patent: **21.10.2015**
(21) Application number: 11155721.1
(22) Date of filing: 24.02.2011
(51) Int. Cl.: B32B 11/08, B32B 15/08, B32B 27/12, B32B 27/18, B32B 27/20, B32B 27/32, E04B 1/64, E04B 1/66, E04D 12/00, E04D 13/14, E04D 13/147, E04D 5/04, E04D 5/06, E04D 5/10

(54) **Self-adhesive fabric reinforced thermoplastic polyolefin waterproof membrane**
Selbstklebende wasserdichte mit Gewebe verstärkte thermoplastische Polyolefinmembran
Membrane auto-adhésive imperméable en polyoléfine thermoplastique renforcée avec un voile

(30) Priority: 01.04.2010 CN 201010137366
(43) Date of publication of application: 05.10.2011
(73) Proprietor: Tangshan Desheng Waterproof Materials Co., Ltd., Tangshan Hebei (CN)
(72) Inventor: Lulu, Huang, Tangshan Hebei (CN); Desheng, Li, Tangshan Hebei (CN)
(74) Representative: Von Kreisler Selting Werner - Partnerschaft von Patentanwälten und Rechtsanwälten mbB

(56) References cited:
- EP-A1- 1 748 055
- WO-A1-2007/027602
- WO-A1-2009/009667
- WO-A2-2008/030267
- GB-A- 2 361 485
- US-A1- 2002 037 405
- US-A1- 2004 009 319
- US-A1- 2008 020 662
- US-B1- 6 308 482
- DATABASE WPI Week 200976 Thomson Scientific, London, GB; AN 2009-Q92205 XP002648823, & CN 201 334 750 Y (TANGSHAN DESHENG WATER PROOF MATERIALS C) 28 October 2009 (2009-10-28)

## Description

### Field of the Invention

The present invention relates to a waterproof membrane, particularly to a self-adhesive fabric reinforced thermoplastic polyolefin waterproof membrane.

### Background of the Invention

Thermoplastic polyolefin (referred to as "TPO" hereinafter) material is a material containing carbon and hydrogen elements only, which is characterized by environment friendly, easy processing, perfect low-temperature performance, excellent weldability and durability. It has been widely applied to single-ply roofing systems in European and American countries, of which, the application has witnessed a year-on-year increase.

Single-ply roofing system is normally applicable to large roofs of supermarkets and plants instead of roofs of a plurality of domestic civil residential buildings of relatively smaller area. Single-ply roofing system is generally installed by means of mechanical fastening and hot-air welding. Such installation method has such advantages as quick installation and high reliability despite of such deficiencies as a plurality of accessories, expensive installation tools, damages to the roof and vulnerability to leakage as incurred by damages.

Waterproof membrane available in the market at present have such deficiencies as inadequate elongation, poor dimensional stability, inadequate flatness, inadequate bonding with self-adhesive bitumen and poor durability.

### Summary of the Invention

Object of the present invention is to provide a powerful self-adhesive fabric reinforced thermoplastic polyolefin waterproof membrane characterized by high elongation, perfect low-temperature performance, excellent weatherability, high solar reflection rate and easy installation. It has overcome deficiencies to prior art of waterproof membrane, such as low elongation, poor dimensional stability, inadequate flatness, inadequate bonding with self-adhesive bitumen and poor durability.

The self-adhesive fabric reinforced thermoplastic polyolefin waterproof membrane of this invention comprises at least a fabric reinforced thermoplastic polyolefin layer, a functional transition layer and a self-adhesive bitumen layer, which is a multilayer membrane; the said fabric reinforced thermoplastic polyolefin layer comprises two thermoplastic polyolefin layers and one scrim layer between them; the said thermoplastic polyolefin layer mainly comprises materials of the following components and given in parts by weight: 40-60 parts by weight of a first-component thermoplastic polyolefin, 40-60 parts by weight of a second-component thermoplastic polyolefin, 25-50 parts by weight of a filler, 1-2 parts by weight of a coupling agent, 3-6 parts by weight of a UV screener and 0.3-0.6 parts by weight of an antioxidant and light stabilizer, respectively, the said first-component thermoplastic polyolefin of the said thermoplastic polyolefin layer is the propylene-ethylene copolymer, α-olefin-ethylene copolymer or propylene-ethylene-butylene terpolymer polymerized by metallocene catalysts; and the said second-component thermoplastic polyolefin is linear low density polyethylene, low density polyethylene or polypropylene with melt index ranging from 0.5 to 5 as determined by ASTM D1238; The said filler is light or heavy calcium carbonate, magnesium hydroxide or aluminum hydroxide ranging from 1250 meshes to 5000 meshes, "meshes" have been determined herein according to Tyler Standard Screen scale; the said coupling agent is titanate or aluminate coupling agent; the said UV screener is titanium dioxide or carbon black; the said antioxidant is n-Otadecyl-β-(4-hydroxy-3,5-di-tert-butyl-phenyl)-propionate), 1,3,5-tris(3,5-di-tert-butyl-4-hydroxyphenyl)-s-triazine-2,4,6-(1H, 3H, 5H)trione or dilauryl thiodipropionate; the said light stabilizer is Poly[[6-[(1,1,3,3-tetramethylbutyl)amino]-s-triazine-2,4-diyl]-[(2,2,6,6-tetramethy 1-4-piperidyl)imino]-hexamethylene-[(2,2,6,6-tetramethyl-4-piperidyl)imino]], poly[[6-[(1,1,3,3-tetramethylbutyl)amino]-s-triazine-2,4-diyl]-[(2,2,6,6-tetramethy 1-4-piperidyl)imino]-hexamethylene-[(2,2,6,6-tetramethyl-4-piperidyl)imino]] or Poly[1-(2'-Hydroxyethyl)-2,2,6,6-Tetramethyl-4-Hydroxy-Piperidyl Succinate], the said functional transition layer is aluminum film or aluminum plastic film, according to claim 1.

As compared with prior art, self-adhesive fabric reinforced thermoplastic polyolefin waterproof membrane of this invention is provided with features of TPO membrane, such as environment friendly, easy processing, perfect low-temperature performance, excellent weldability and durability, as well as advantages of self-adhesive bitumen membrane such as easy installation, high bonding strength of substrate, watertight fully adhered performance and reliable hot-air welding joints. It is characterized by high strength, perfect elongation, excellent low-temperature performance, high weatherability and high solar reflection rate, perfect flatness of membrane, adequate bonding with self-adhesive bitumen and easy installation, which is a type of advanced waterproof membrane.

### Brief description of the drawings

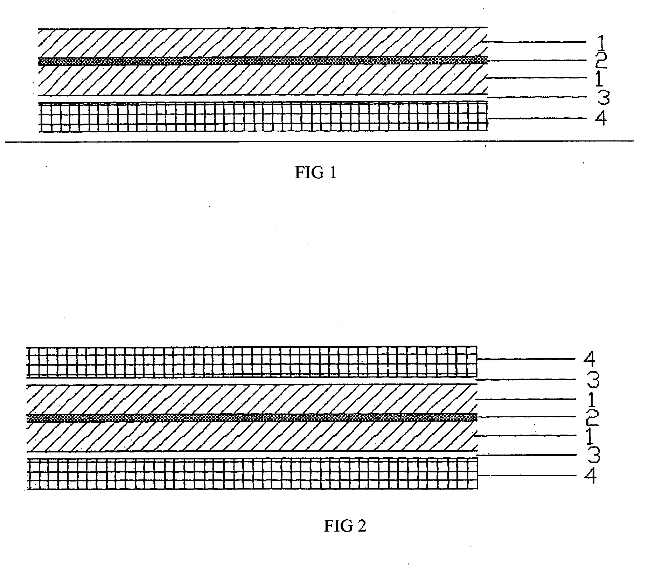

FIG 1 and 2 are stratified structural view of this invention. There exists thickness difference between FIG 1 and FIG 2.

Thermoplastic polyolefin layer 1, scrim layer 2, functional transition layer 3 and self-adhesive bitumen layer 4 are as shown in drawings.

### Description of the preferred embodiment

The invention is explained in further detail below in combination with the drawings.

As shown in FIG 1 and FIG 2, self-adhesive fabric reinforced thermoplastic polyolefin waterproof membrane of this invention comprises at least a fabric reinforced thermoplastic polyolefin layer, a functional transition layer 3 and a self-adhesive bitumen layer 4, which is a multiplayer membrane. The fabric reinforced thermoplastic polyolefin layer comprises two thermoplastic polyolefin layers 1 and one scrim layer 2 between them with preferred total thickness ranging from 1.6mm to 2.5mm.

Components and parts by weight of said thermoplastic polyolefin layer are stated as follows:
First-component thermoplastic polyolefin 60 parts by weight
Second-component thermoplastic polyolefin 40 parts by weight
Filler 30 parts by weight
Coupling agent 1 parts by weight
UV screener 5 parts by weight
Antioxidant 0.5 parts by weight
Light stabilizer 0.5 parts by weight

The said first-component thermoplastic polyolefin is the propylene-ethylene copolymer, α-olefin-ethylene copolymer or propylene-ethylene-butylene terpolymer polymerized by metallocene catalysts. It is applicable to use products available in the market, such as VERSIFY 2300 and 2400 as manufactured by Dow Chemical. Such TPO can provide excellent flexibility, penetration resistance and weldability.

The said second-component thermoplastic polyolefin is linear low density polyethylene, low density polyethylene or Polypropylene with melt index ranging from 0.5 to 5 and determined in accordance with ASTM D1238. It is applicable to use products available in the market, such as linear low density polyethylene 7042 and polypropylene K8003 as manufactured by Sinopec Yangzi Petrochemical Co., Ltd. Such resins can provide perfect mechanical performance and heat resistance.

The said filler is light or heavy calcium carbonate, magnesium hydroxide or aluminum hydroxide ranging from 1250 meshes to 5000 meshes. It is applicable to use products available in the market, such as light calcium carbonate of 3000 meshes as manufactured by Tianjin Juntong Technical Development Limited Company, which is available for improvement of heat and creep resistance as well as reduction of cost. Magnesium hydroxide or aluminum hydroxide used is favorable for improvement of flame retardancy of the waterproof membrane. All figures given in "meshes" have been determined herein according to Tyler Standard screen scale.

The said coupling agent is titanate or aluminate. Add 1 parts by weight coupling agent into 30 parts by weight filler for high-speed mixing so as to carry out surface treatment to the filler Such treatment can improve the interface bonding between resin and filler to minimize the influence on mechanical performance of the waterproof membrane.

The said UV screener is titanium dioxide or carbon black. It is applicable to use products available in the market, such as DUPONT R5566 titanium dioxide and CABOT 234 carbon black. Add titanium dioxide or carbon black or both according to specific purposes or requirements. Such UV screener has such functions as ultraviolet shielding and promotion of solar reflection rate.

The said antioxidant is 1076 antioxidant (chemical name: n-Otadecyl-β-(4-hydroxy-3,5-di- tert -butyl-phenyl)-propionate), 3114 antioxidant (chemical name: 1, 3, 5, tris (3,5- di-tert-butyl-4- hydroxyphenyl) s-triazine, 2, 4, 6- (1H, 3H, 5H) trione ) or DLDP antioxidant (chemical name: dilauryl thiodipropionate). It is applicable to use products available in the market, such as 1076 antioxidant as manufactured by Beijing San'an Chemical Product Co., Ltd. Such antioxidants aim to reduce the thermal degradation during processing and use.

The said light stabilizer is 944 light stabilizer (chemical name: Poly[[6-[(1,1,3,3-tetramethylbutyl)amino]-s-triazine-2,4-diyl]-[(2,2,6,6-tetramethy 1-4-piperidyl)imino]-hexamethylene-[(2,2,6,6-tetramethyl-4-piperidyl)imino]]), 783 light stabilizer (chemical name: Poly[[6-[(1,1,3,3-tetramethylbutyl)amino]-s-triazine-2,4-diyl]-[(2,2,6,6-tetramethy 1-4-piperidyl)imino]-hexamethylene-[(2,2,6,6-tetramethyl-4-piperidyl)imino]] and Poly[1-(2'-Hydroxyethyl)-2,2,6,6-Tetramethyl-4-Hydroxy-PiperidylSuccinate] compound) or 622 light stabilizer (chemical name: Poly[1-(2'-Hydroxyethyl)-2,2,6,6-Tetramethyl-4-Hydroxy-PiperidylSuccinate]).It is applicable to use products available in the market, such as 944 light stabilizer as manufactured by Beijing San'an Chemical Product Co., Ltd. Such light stabilizer aim to reduce photodegradation of waterproof membrane during use.

Preferred fabric reinforced layer is warp-knitted nylon scrim. It has higher strength and perfect tearing strength and penetration resistance as compared with warp-knitted polyester scrim.

The functional transition layer is aluminum film or aluminum plastic film. It has such functions as improvement of composite strength of self-adhesive bitumen and TPO membrane, reflection of partial infrared and far infrared wave, and thermal insulation.

Thickness of preferred self-adhesive bitumen layer ranges from 0.3mm to 0.7mm. It is applicable to installation with fully adhered method, wet installed method and pre-applied method, which is characterized by high efficiency and installation speed and watertight firm bonding with the substrate.

### Embodiment 1

As shown in FIG 1, the self-adhesive fabric reinforced thermoplastic polyolefin waterproof membrane has a total thickness of 1.8mm, which comprises two thermoplastic polyolefin layers 1, one scrim layer 2, one transition layer 3 and one self-adhesive bitumen layer 4. Its layout sequence is as shown in FIG 1: thermoplastic polyolefin layer 1- scrim layer 2 - thermoplastic polyolefin layer 1 - transition layer 3 - self-adhesive bitumen layer 4. Thickness of self-adhesive bitumen layer 4 is 0.6mm. It is a five-layer structural membrane.

Components and parts by weight of thermoplastic polyolefin layer as shown in FIG 1 are as follows:
First-component thermoplastic polyolefin 60 parts by weight
Second-component thermoplastic polyolefin 40 parts by weight
filler 30 parts by weight
Coupling agent 1 parts by weight
UV screener 5 parts by weight
Antioxidant 0.5 parts by weight
Light stabilizer 0.5 parts by weight
First-component thermoplastic polyolefin is VERSIFY 2300 as manufactured by Dow Chemical.
Second-component thermoplastic polyolefin is 7042 linear low density polyethylene as manufactured by Sinopec Yangzi Petrochemical Co., Ltd.
Filler is light calcium carbonate of 3000 meshes as manufactured by Tianjin Juntong Technical Development Limited Company.
Coupling agent is titanate coupling agent.
UV screener is DUPONT R5566 titanium pigment.
Antioxidant is 1076 antioxidant as manufactured by Beijing San'an Chemical Product Co., Ltd.
Light stabilizer is 944 light stabilizer as manufactured by Beijing San'an Chemical Product Co., Ltd.
Fabric reinforced layer is warp-knitted nylon scrim.
Functional transition layer is aluminum film.
Self-adhesive bitumen layer has a thickness of 0.6mm.

Results of test according to Q / RDSC04-2009 Enterprise Standard are stated as follows:

| No. | Items Tested | | Technical Indicators | Actual Indicators |
|---|---|---|---|---|
| 1 | Tension, N/5cm ≥ | | 800 | 820 |
| 2 | Elongation at break, % ≥ | | 600 | 795 |
| 3 | Low-temperature bending property, ° C | | -40, no crack | No crack |
| 4 | Impermeability | | 0.5 MPa | Impermeable |
| | | | Impermeable for 120 min | |
| 5 | Peel strength of self-adhesive bitumen surface, adhesion to aluminum plate N / mm ≥ | | 1.5 | 2.2 |
| 6 | Tearing strength, N ≥ | | 70 | 77.6 |
| 7 | Heat resistance of self-adhesive bitumen surface | | 80°C, sliding no more than 2mm | Acceptable |
| 8 | Heat aging (70°C, 168h) | Tension variation, % | ±20 | -8.3 |
| | | Elongation | ±20 | -2.1 |
| | | variation, % | | |
| | | Low-temperature bending property | -35, no crack | No crack |
| 9 | Artificial weathering, 2500h | Appearance | No crack and lamination | Acceptable |
| | | Tension reservation rate %, ≥ | 90 | 92.4 |
| | | Elongation reservation rate, % > | 90 | 97.6 |
| | | Low-temperature bending property | -40°C, no crack | No crack |

### Embodiment 2

As shown in FIG 2, the self-adhesive fabric reinforced thermoplastic polyolefin waterproof membrane has a total thickness of 2.0mm, which comprises two thermoplastic polyolefin layers 1, one scrim layer 2, two transition layers 3 and two self-adhesive bitumen layers 4; thickness of self-adhesive bitumen layer 4 is 0.5mm. Its layout sequence is as follows: self-adhesive bitumen layer 4 - transition layer 3 - thermoplastic polyolefin layer1 -scrim layer 2 - thermoplastic polyolefin layer 1 - transition layer 3 - self-adhesive bitumen layer 4. It is a seven-layer structure.

Components and parts by weight of thermoplastic polyolefin layer as shown in FIG 2 are stated as follows:
First-component thermoplastic polyolefin 60 parts by weight
Second-component thermoplastic polyolefin 40 parts by weight
Filler 25 parts by weight
Coupling agent 1 parts by weight
UV screener 5 parts by weight
Antioxidant 0.5 parts by weight
Light stabilizer 0.5 parts by weight
First-component thermoplastic polyolefin is Softtell CA02A as manufactured by Lyondell Basell.
Second-component thermoplastic polyolefin is 2420F low density polyethylene as manufactured by CNOOC and Shell Petrochemicals Company Limited.
Filler is light calcium carbonate of 3000 meshes as manufactured by Tianjin Juntong Technical Development Limited Company.
Coupling agent is of titanate type.
UV screener is DUPONT R5566 titanium dioxide and Cabot 234 carbon black batched at the proportion of 4:1.
Antioxidant is 3114 antioxidant as manufactured by Beijing San'an Chemical Product Co., Ltd.
Light stabilizer is 783 light stabilizer as manufactured by Beijing San'an Chemical Product Co., Ltd.
Fabric reinforced layer is warp-knitted nylon scrim.
Functional transition layer is aluminum film.
Self-adhesive bitumen layer has a thickness of 0.5mm.

Results of test according to Q / RDSC04-2009 Enterprise Standard are stated as follows:

| No. | Items Tested | | Technical Indicators | Actual Indicators |
|---|---|---|---|---|
| 1 | Tension, N/5cm ≥ | | 800 | 817 |
| 2 | Elongation at break, % ≥ | | 600 | 783 |
| 3 | Low-temperature bending property, °C | | -40, no crack | No crack |
| 4 | Impermeability | | 0.5 MPa | Impermeable |
| | | | Impermeable for 120 min | |
| 5 | Peel strength of self-adhesive bitumen surface, adhesion to aluminum plate N / mm ≥ | | 1.5 | 2.4 |
| 6 | Tearing strength, N ≥ | | 70 | 78.5 |
| 7 | Heat resistance of self-adhesive bitumen surface | | 80°C, sliding no more than 2mm | Acceptable |
| 8 | Heat aging (70°C, 168h) | Tension variation, % | ±20 | -9.1 |
| | | Elongation variation, % | ±20 | -2.7 |
| | | Low-temperature bending property | -35, no crack | No crack |
| 9 | Artificial weathering, 2500h | Appearance | No crack and lamination | Acceptable |
| | | Tension reservation rate %, ≥ | 90 | 92.1 |
| | | Elongation reservation rate, % > | 90 | 97.2 |
| | | Low-temperature bending property | -40°C, no crack | No crack |

Number of layers and thickness of this invention are selected as per design demands.

Disclosed above are embodiments of this invention. Despite of preferred embodiments as disclosed above, this invention is not limited thereby. Any variation as considered by technical personnel in this field for alteration and modification of this invention shall be incorporated into the protection scope of this invention unless it is deviated from the design conception of this invention.

## Claims

1. A self-adhesive fabric reinforced thermoplastic polyolefin waterproof membrane, which is **characterized in that** it comprises at least a fabric reinforced thermoplastic polyolefin layer, a functional transition layer and a self-adhesive bitumen layer, which is a multilayer membrane; the said fabric reinforced thermoplastic polyolefin layer comprises two thermoplastic polyolefin layers and a scrim layer between them; the said thermoplastic polyolefin layers mainly comprise materials of the following components given in parts by weight: 40-60 parts by weight. for first-component thermoplastic polyolefin, 40-60 parts by weight for second-component thermoplastic polyolefin, 25-50 parts by weight of a filler, 1-2 parts by weight of a coupling agent, 3-6 parts by weight of a UV screener and 0.3-0.6 parts by weight of an antioxidant and light stabilizer respectively, the said first-component thermoplastic polyolefin of the said thermoplastic polyolefin layer is the propylene-ethylene copolymer, α-olefin-ethylene copolymer or propylene-ethylene-butylene terpolymer polymerized by metallocene catalysts; and the said second-component thermoplastic polyolefin is linear low density polyethylene, low density polyethylene or Polypropylene with melt index ranging from 0.5 to 5 as determined by ASTM D1238; The said filler is light or heavy calcium carbonate, magnesium hydroxide or aluminum hydroxide ranging from 1250 meshes to 5000 meshes, "meshes" have been determined herein according to Tyler Standard Screen scale; The said coupling agent is titanate or aluminate coupling agent; The said UV screener is titanium dioxide or carbon black; The said antioxidant is n-Otadecyl-β-(4-hydroxy-3,5-di-tert-butyl-phenyl)-propionate), 1,3,5-tris(3,5-di-tert-butyl-4-hydroxyphenyl)-s-triazine-2,4,6-(1H, 3H, 5H)trione or dilauryl thiodipropionate; The said light stabilizer is Poly[[6-[(1,1,3,3-tetramethylbutyl)amino]-s-triazine-2,4-diyl]-[(2,2,6,6-tetramethy 1-4-piperidyl)imino]-hexamethylene-[(2,2,6,6-tetramethyl-4-piperidyl)imino]], Poly[[6-[(1,1,3,3-tetramethylbutyl)amino]-s-triazine-2,4-diyl]-[(2,2,6,6-tetramethy 1-4-piperidyl)imino]-hexamethylene-[(2,2,6,6-tetramethyl-4-piperidyl)imino]] or Poly[1-(2'-Hydroxyethyl)-2,2,6,6-Tetramethyl-4-Hydroxy-PiperidylSuccinate], the said functional transition layer is aluminum film or aluminum plastic film.

2. The self-adhesive fabric reinforced thermoplastic polyolefin waterproof membrane according to Claim 1, which is **characterized in that** the said fabric reinforced layer is weaved nylon scrim.

3. The self-adhesive fabric reinforced thermoplastic polyolefin waterproof membrane according to Claim 1, which is **characterized in that** thickness of the said self-adhesive bitumen layer is 0.3-0.7mm.

## Patentansprüche

1. Selbstklebende textilverstärkte wasserfeste Membran aus thermoplastischem Polyolefin, **dadurch gekennzeichnet, dass** sie wenigstens eine textilverstärkte thermoplastische Polyolefinschicht, eine funktionelle Übergangsschicht und eine selbstklebende Bitumenschicht umfasst, wobei es sich um eine mehrschichtige Membran handelt; wobei die textilverstärkte thermoplastische Polyolefinschicht zwei thermoplastische Polyolefinschichten und dazwischen eine Gittergewebeschicht umfasst; wobei die thermoplastischen Polyolefinschichten hauptsächlich Materialien aus den folgenden Komponenten umfassen, die in Gewichtsteilen angegeben sind: 40-60 Gewichtsteile für das thermoplastische Polyolefin der ersten Komponente, 40-60 Gewichtsteile für das thermoplastische Polyolefin der zweiten Komponente, 25-50 Gewichtsteile eines Füllstoffs, 1-2 Gewichtsteile eines Kopplungsmittels, 3-6 Gewichtsteile eines UV-Blockers und jeweils 0,3-0,6 Gewichtsteile eines Antioxidans und eines Lichtstabilisators, wobei das thermoplastische Polyolefin der ersten Komponente der thermoplastischen Polyolefinschicht ein Propylen-Ethylen-Copolymer, ein α-Olefin-Ethylen-Copolymer oder ein Propylen-Ethylen-Butylen-Terpolymer, das durch Metallocen-Katalysatoren polymerisiert ist, ist; und wobei das thermoplastische Polyolefin der zweiten Komponente lineares Polyethylen geringer Dichte, Polyethylen geringer Dichte oder Polypropylen mit einem gemäß ASTM D1238 bestimmten Schmelzindex im Bereich von 0,5 bis 5 ist; wobei es sich bei dem Füllstoff um leichtes oder schweres Calciumcarbonat, Magnesiumhydroxid oder Aluminiumhydroxid im Bereich von 1250 mesh bis 5000 mesh handelt, wobei die Teilchengröße in "mesh" hier gemäß der Tyler-Standard-Screen-Skala bestimmt ist, wobei das Kopplungsmittel ein Titanat- oder Aluminat-Kopplungsmittel ist, wobei es sich bei dem UV-Blocker um Titandioxid oder Ruß handelt; wobei es sich bei dem Antioxidans um n-Octadecyl-β-(4-hydroxy-3,5-di-tert-butylphenyl)propionat), 1,3,5- Tris(3,5-di-tert-butyl-4-hydroxyphenyl)-s-triazin-2,4,6-(1H,3H,5H)trion oder Dilaurylthiodipropionat handelt, wobei es sich bei dem Lichtstabilisator um Poly[[6-[(1,1,3,3-tetramethylbutyl)amino]-s-triazin-2,4-diyl][(2,2,6,6-tetramethyl-4-piperidyl)imino]hexamethylen-[(2,2,6,6-tetramethyl-4-piperidyl)imino]]), Poly[[6-[(1,1,3,3-tetramethylbutyl)amino]-s-triazin-2,4-diyl][(2,2,6,6-tetramethyl-4-piperidyl)imino]-hexamethylen[(2,2,6,6-tetramethyl-4-piperidyl)imino]] oder Poly[1-(2'-hydroxyethyl)-2,2,6,6-tetramethyl-4-hydroxypiperidylsuccinat] handelt; wobei es sich bei der funktionellen Übergangsschicht um Aluminiumfolie oder Aluminium-Kunststoff-Folie handelt.

2. Selbstklebende textilverstärkte wasserfeste Membran aus thermoplastischem Polyolefin gemäß Anspruch 1, **dadurch gekennzeichnet, dass** es sich bei der textilverstärkten Schicht um ein Nylongittergewebe handelt.

3. Selbstklebende textilverstärkte wasserfeste Membran aus thermoplastischem Polyolefin gemäß Anspruch 1, **dadurch gekennzeichnet, dass** die Dicke der selbstklebenden Bitumenschicht 0,3-0,7 mm beträgt.

## Revendications

1. Membrane auto-adhésive imperméable en polyoléfine thermoplastique renforcée avec un voile, **caractérisée en ce qu'**elle comprend au moins une couche de polyoléfine thermoplastique renforcée avec un voile, une couche de transition fonctionnelle et une couche de bitume auto-adhésive, qui est une membrane à plusieurs couches, ladite couche de polyoléfine thermoplastique renforcée avec un voile comprend deux couches de polyoléfine thermoplastique et une couche de canevas entre les deux, lesdites couches de polyoléfine thermoplastique comprennent principalement des matériaux des composants suivants, exprimés en parties en poids : 40-60 parties en poids pour la polyoléfine thermoplastique du premier composant, 40-60 parties en poids pour la polyoléfine thermoplastique du second composant, 25-50 parties en poids d'une charge, 1-2 parties en poids d'un agent de couplage, 3-6 parties en poids d'un bloqueur d'UV, et 0,3-0,6 parties en poids d'un antioxydant et d'un stabilisant à la lumière respectivement, ladite polyoléfine thermoplastique du premier composant de ladite couche de polyoléfine thermoplastique est un copolymère propylène-éthylène, un copolymère α-oléfine-éthylène ou un terpolymère propylène-éthylène-butylène, polymérisé par des catalyseurs métallocènes, et ladite polyoléfine thermoplastique du second composant est un polyéthylène à basse densité linéaire, polyéthylène à basse densité, ou polypropylène avec un indice de fusion compris entre 0,5 et 5, déterminé selon ASTM D1238, ladite charge est le carbonate de calcium léger ou lourd, l'hydroxyde de magnésium ou l'hydroxyde d'aluminium avec une granulométrie comprise entre 1250 mailles et 5000 mailles, la granulométrie en "mailles" ayant été déterminée selon l'échelle de tamis standard de Tyler, ledit agent de couplage est un agent de couplage titanate ou aluminate, ledit bloqueur d'UV est le dioxyde de titane ou le noir de carbone, ledit antioxydant est le n-octadécyl-β-(4-hydroxy3,5-di-tert-butylphényl)propionate), la 1,3,5-tris(3,5-di-tert-butyl-4-hydroxyphényl)-s-triazine-2,4,6-(1H,3H,5H)trione ou le dilaurylthiodipropionate, ledit stabilisant à la lumière est le poly[[6-[(1,1,3,3-tétraméthylbutyl)amino]-s-triazine-2,4-diyl][(2,2,6,6-tétraméthyl-4-pipéridyl)-imino]hexaméthylène[(2,2,6,6-tétraméthyl-4-pipéridyl)imino]]), le poly-[[6-[(1,1,3,3-tétraméthylbutyl)amino]-s-triazine-2,4-diyl][(2,2,6,6-tétraméthyl-4-pipéridyl)imino]hexaméthylène[(2,2,6,6-tétraméthyl-4-pipéridyl)imino]] ou le poly[1-(2'-hydroxyéthyl)-2,2,6,6-tétraméthyl-4-hydroxypipéridylsuccinate], ladite couche de transition fonctionnelle est une feuille d'aluminium ou une feuille d'aluminium-matière plastique.

2. Membrane auto-adhésive imperméable en polyoléfine thermoplastique renforcée avec un voile selon la revendication 1, **caractérisée en ce que** ladite couche renforcée avec un voile est un canevas en nylon.

3. Membrane auto-adhésive imperméable en polyoléfine thermoplastique renforcée avec un voile selon la revendication 1, **caractérisée en ce que** l'épaisseur de ladite couche de bitume auto-adhésive est de 0,3 à 0,7 mm.
